# EUROPEAN PATENT APPLICATION

(11) **EP 4 802 897 A1**
(43) Date of publication of application: **09.09.2026**
(21) Application number: 23957020.3
(22) Date of filing: 03.11.2023
(51) Int. Cl.: A21B 3/04, A21B 1/26, A21B 5/00, A47J 37/06

(54) **DEVICE FOR CONTINUOUS AIR CIRCULATION IN IMPINGEMENT ELECTRIC OVENS**

(71) Applicant: Pratica Produtos S.A., 37556-140 Pouso Alegre (BR)
(72) Inventor: ROSA REZANDE, Luiz Eduardo, 37553-659 Pouso Alegre (BR)
(74) Representative: Inchingalo, Simona
(86) International application number: PCT/BR2023/050374
(87) International publication number: WO 2025/091096

(57) **Abstract**

The present patent application discloses a device for continuous air circulation in impingement electric ovens, pertaining to the field of ovens for cooking food in general, and more specifically for use in electric ovens for cooking pizzas, provided with catalytic converter filters that eliminate the need for extraction; it comprises an apparatus integrated into an impingement electric oven (IA), provided with a catalytic air filter (35), thereby eliminating the need for an extractor hood, and more specifically comprises a rigid metal structure that incorporates a cooking chamber (5) and chambers for distributing hot air into said cooking chamber (5), a centrifugal fan, and the catalytic air filter (35).

## Description

### Technical Field

The present invention relates to a device for continuous air circulation in impingement electric ovens, pertaining to the field of ovens for cooking food in general, and more specifically for use in electric ovens for cooking pizzas, provided with catalytic converter filters, thereby eliminating the need for extractor hood.

This device, which includes a cooking chamber, is designed to promote improved air circulation within the chamber for cooking pizzas, but it can also be used to finish or regenerate various chilled or frozen foods, resulting in excellent sensory properties (texture, appearance, flavor).

### State of the art

With the growing need to reduce energy consumption, various types of ovens for cooking foods such as pizzas have emerged on the market, replacing wood-fired ovens, as a measure to adopt environmentally sound and more economical policies.

The use of newer energy reduction technologies assists the food industry in developing products with lower energy consumption, as well as in establishing more efficient processes and better controlling existing processes.

In this respect, more recently electric deck with impinged air technology have emerged on the market, for generic foods.

Impinged air technology involves the forced circulation of air inside the cooking chamber.

In order to present the state of the art, some patent documents concerning electric ovens may be cited, but without reaching the inventive merit, differentials and constructive arrangement disclosed here, as follows below.

Patent document US9320284B2, entitled "CONVEYOR OVEN WITH SPLIT FLOW SCROLL" discloses a convection oven system including a cooking chamber, a heat source for generating heated air to be provided to the cooking chamber, a centrifugal blower in airflow communication with the heat source, an air distribution housing in airflow communication with the centrifugal blower, the air distribution housing having a plurality of outlets, and at least one heat distribution finger in airflow communication with the plurality of outlets of the air distribution housing. The heated air generated by the heat source is forced by the centrifugal blower through the outlets of the air distribution housing into the at least one finger for distribution into the cooking chamber.

Patent document US20100058936A1, entitled "RECIRCULATING END COVER PLATES FOR A CONVEYOR OVEN" discloses a conveyor oven comprising a heated cavity having an inlet opening and an outlet opening. A conveyor within the cavity extends between the openings. A cover plate is coupled to the oven to at least partially define one of the openings. The cover plate includes at least one air intake hole and at least one air return hole in fluid communication with one another through the first cover plate. Heated air in the cavity enters the cover plate through the at least one air intake hole adjacent the opening and exits the cover plate through the at least one air return hole at a location within the cavity that is spaced from the opening, thereby redirecting heated air that would otherwise escape the cavity from the opening back into the cavity.

Patent document US20080264402A1, entitled "OVENS HAVING A COLD AIR RETURN BAFFLE AND METHODS FOR CIRCULATING AIR IN AN OVEN" discloses ovens for heat treating products and may include food preparation ovens for preparing pizza and similar types of food products. The ovens incorporates one or more cold air return baffles to elongate the flow of hot air across the surface to be heated as well as provide a stagnant heated air zone adjacent to the finger duct.

### Weak points of the state of the art

The main drawback of the objects disclosed in the patent documents above and of other electric impingement ovens found on the market to date lies in the fact that they are not suitable for cooking pizzas, especially raw dough.

In practice, it has been observed that the air impingement technique employed to date promotes uneven cooking of these foods, resulting in marks that resemble a chessboard, establishing points that alternate between "overcooked" and "undercooked" ".

This undesirable phenomenon is due to the high speed of the air, combined with the low height of the cooking chamber.

Patent document US9320284B2, (CONVEYOR OVEN WITH SPLIT FLOW SCROLL) discloses a conveyor oven in which food passes through a cooking chamber where it is supplied with hot air from above and below the food. Heat distribution in the cooking chamber is effected by tubes fitted with orifices; this is a distinct constructiveness from the object of the present patent application.

In turn, patent document US20100058936A1, (RECIRCULATING END COVER PLATES FOR A CONVEYOR OVEN) shows an oven where the food is moved by a conveyor in its cooking chamber, which has air channels above and below the food, which supply air at high speed, since it does not present any similarity with the object of the present patent application and only indicates the general state of the art.

Patent document US20080264402A1, (OVENS HAVING A COLD AIR RETURN BAFFLE AND METHODS FOR CIRCULATING AIR IN AN OVEN) refers to an oven provided with a cooking chamber, with a food inlet and outlet, where the food is moved by a conveyor belt, the cooking cavity being provided with air ducts in the upper and lower portion, which supply air towards the conveyor belt, whose construction is completely distinct from the object of the present patent application, so that it only indicates the state of the general art.

### Proposed solution

To solve this problem, after numerous research and studies, the inventor created and developed the object of this patent, designing a device for continuous air circulation in electric impingement ovens.

In addition to knowledge of the thermophysical properties of the product, understanding the impact of different cooking conditions on the transformations that occur in the product, associated with its sensory properties (texture, appearance, flavor), becomes an indispensable tool for the development of new techniques.

In this context, for the purpose of obtaining the present patent application, several versions of cooking devices with ventilation means were developed, which are composed of an electric motor, frequency inverter, turbine, resistors, catalytic converter, diffusers, centrifugal accelerators, and air outlet holes, to guarantee cooking quality in up to three minutes.

This resulted in a device that, using high-speed air convection in a compact electric oven, achieves a result similar to that of a wood-fired oven, saving space and energy, thereby eliminating the need for an extractor hood.

During the development of the device presented, a difficulty arose in ensuring the uniformity of the pizza, similar to that made in traditional wood-fired ovens. For an accurate evaluation, computational fluid dynamics (CFD) tools and various food tests were used.

It is observed that the device, object of the present patent, in a new constructive form, is based on a mechanical design of stainless-steel parts specifically dimensioned for this purpose. For manufacturing, welding jigs and robots are used for welding the parts, making variations practically negligible.

### Brief description of the figures

In order to complement the present description, and thus obtain a better understanding of the characteristics of the present invention and in accordance with a preferred practical embodiment thereof, a set of drawings is attached to the description, which represent, in an exemplary but not limiting manner, the following:

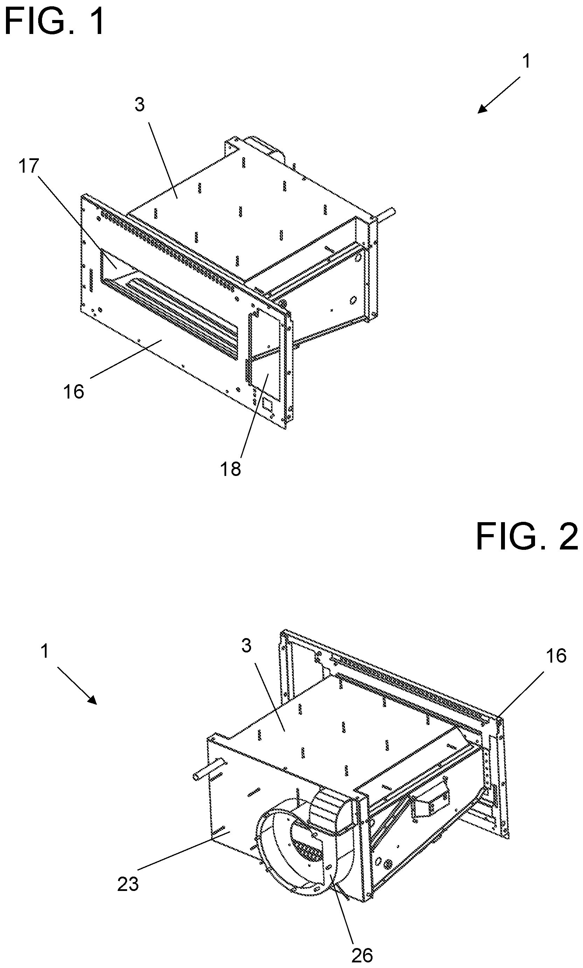

FIG. 1 shows a front perspective view of the device.
FIG. 2 shows a rear perspective view of the device.

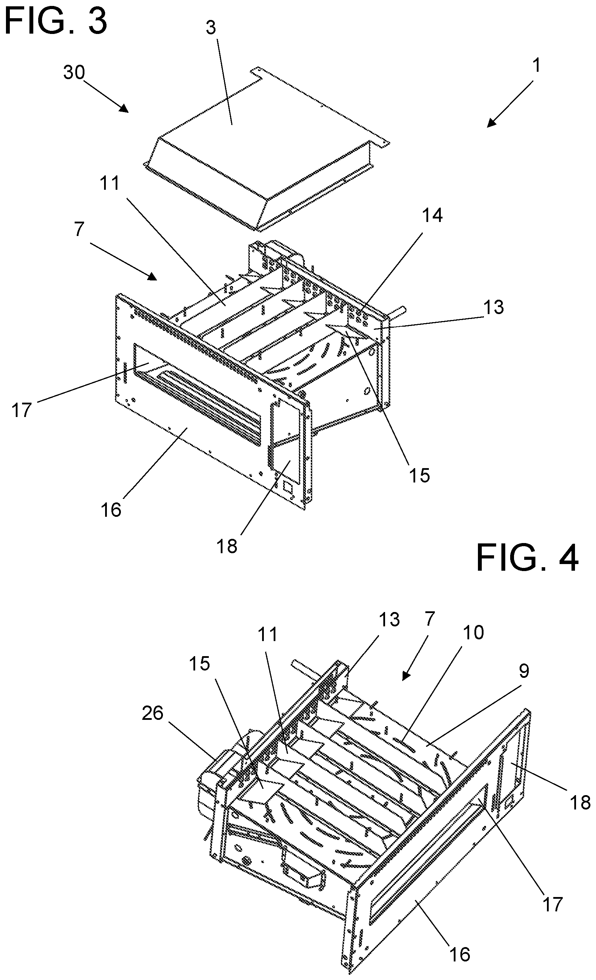

FIG. 3 shows a front perspective view of the device with the top cover displaced.
FIG. 4 shows another front perspective view of the device without the top cover shown.

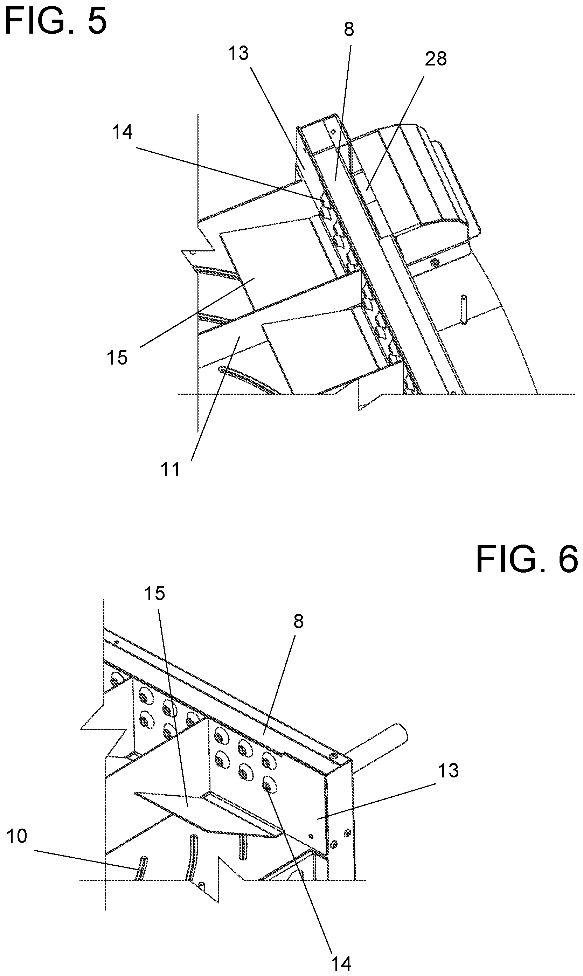

FIG. 5 shows a perspective view of the detail of the left rear portion of the device, where the fan air outlet, the upper passage chamber, the rear plate with conical holes, and the air deflector plate can be seen.
FIG. 6 shows a perspective view of the detail of the right rear portion of the device, where the air deflector plate and the rear plate with conical holes can be seen.
FIG. 7 shows a top view of the device without the top face represented.
FIG. 8 shows a side view of the device.
FIG. 9 shows a top view of the device with section AA indicated.
FIG. 10 shows a sectional view AA of the device.
FIG. 11 shows a partially exploded front perspective view of the device.

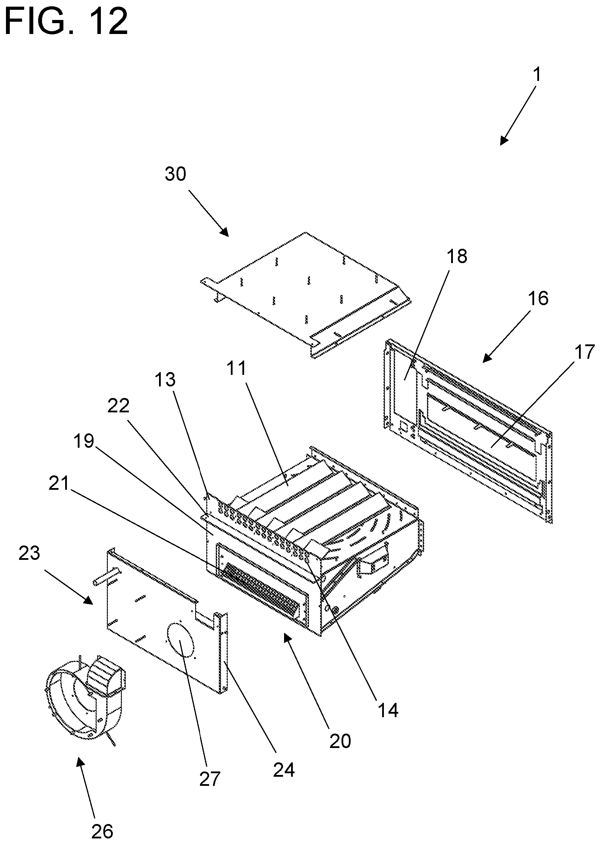

FIG. 12 shows a partially exploded rear perspective view of the device.

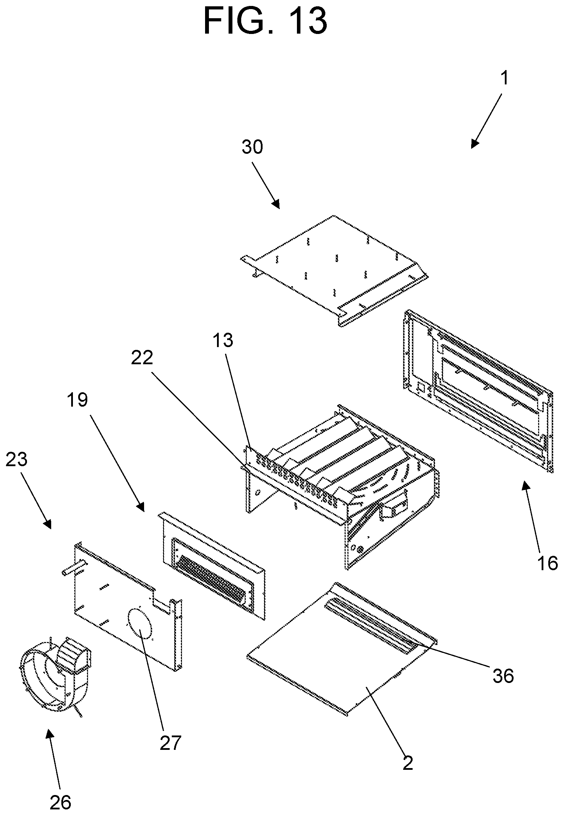

FIG. 13 shows an exploded rear perspective view of the device.

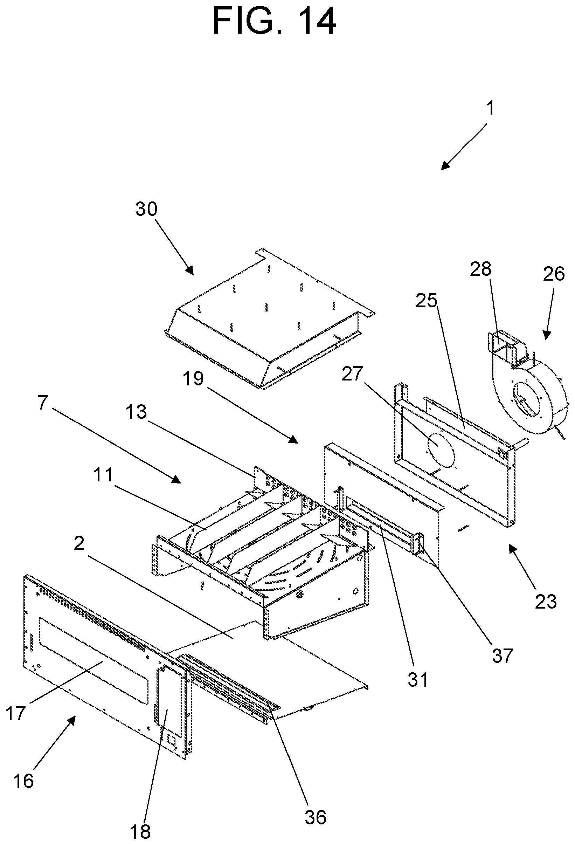

FIG. 14 shows an exploded front perspective view of the device.

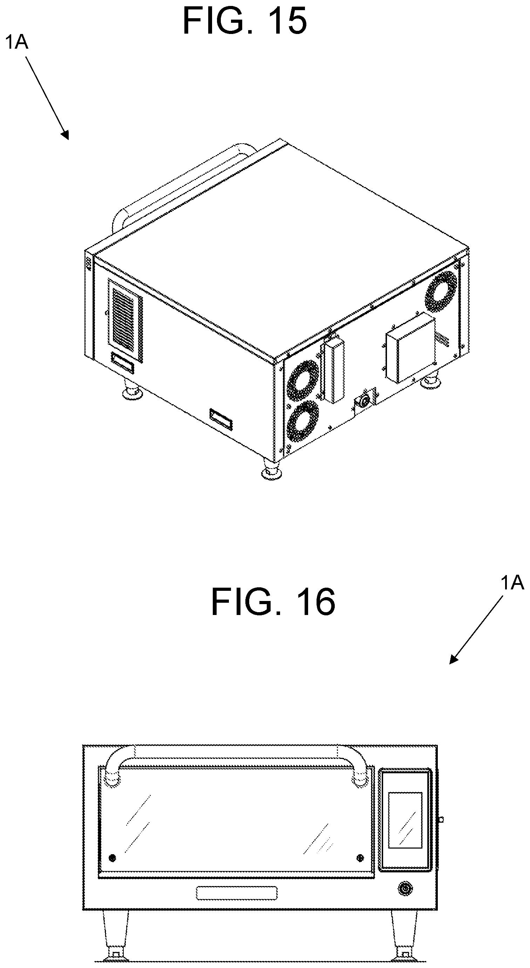

FIG. 15 shows a rear perspective view of an electric oven provided with the device being presented.
FIG. 16 shows a front view of an electric oven provided with said device.

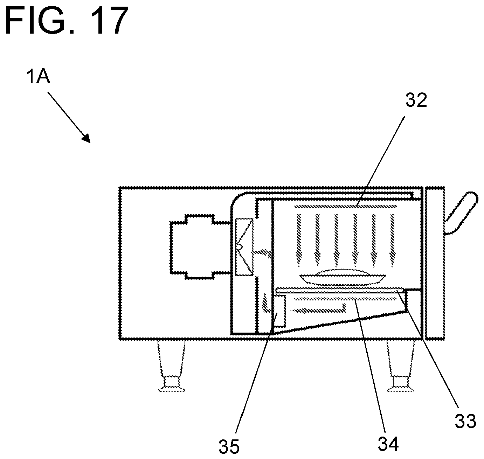

FIG. 17 shows a transparent side view of an electric oven provided with said device, with the arrows representing the airflow.

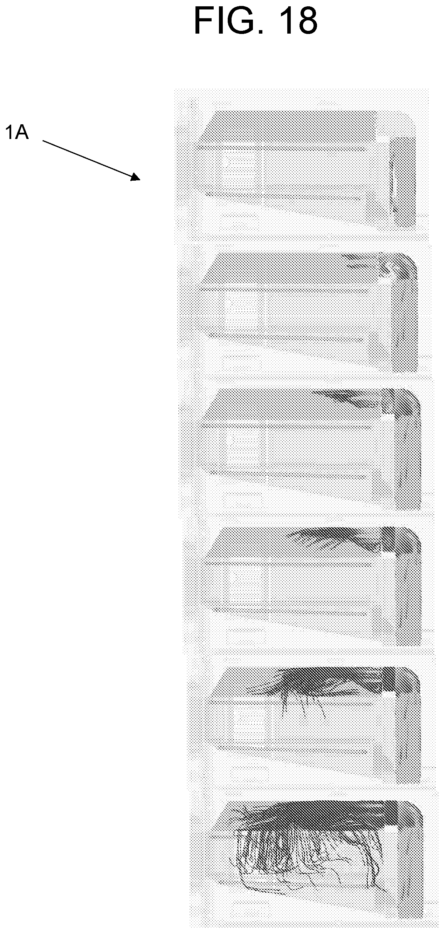

FIG. 18 shows an image of airflow, selected from the thermal image and video survey, where the wavy lines indicate the airflow.
FIG. 19 - Shows another image of airflow, selected from the thermal image and video survey, where the wavy lines indicate the airflow.

### Detailed description of the invention

The object of this patent is an apparatus that integrates an electric impingement oven (1A), provided with a catalytic air filter (35), thereby eliminating the need for an extractor hood.

The respective apparatus, impingement air convection oven, comprises a rigid metal structure incorporating a cooking chamber, chambers for flow and proper distribution of hot air in the cooking chamber, a centrifugal fan, of the snail type and a catalytic air filter.

In more detail, the apparatus consists of a rigid structure (1) of hollow trapezoidal geometry, whose rear face of rectangular geometry is larger than the front portion of rectangular geometry, and the lower face (2) has an inclination that diverges in its rear portion in relation to the horizontal upper face (3), whose initial portion, next to the front face, is chamfered (4).

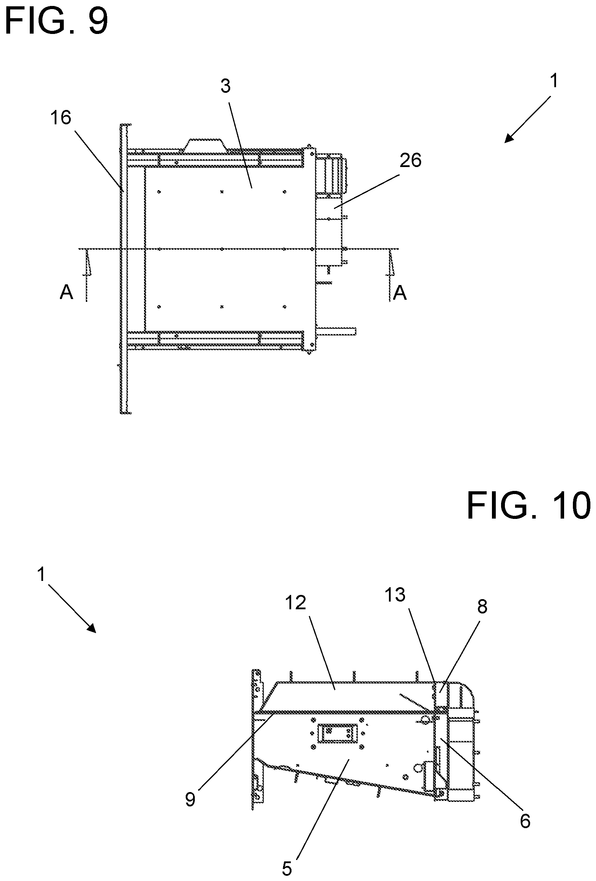

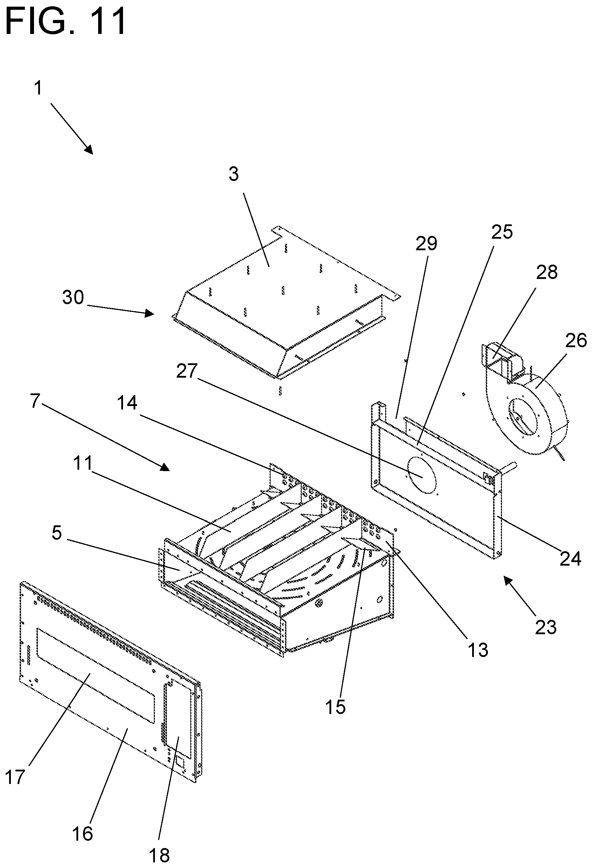

The structure is divided internally into a plurality of compartments, in figures 10 and 11 we can see the cooking chamber (5) which is the largest and occupies the lower front portion, followed in its rear portion by a lower air passage chamber (6) and above by a volumetric portion (7).

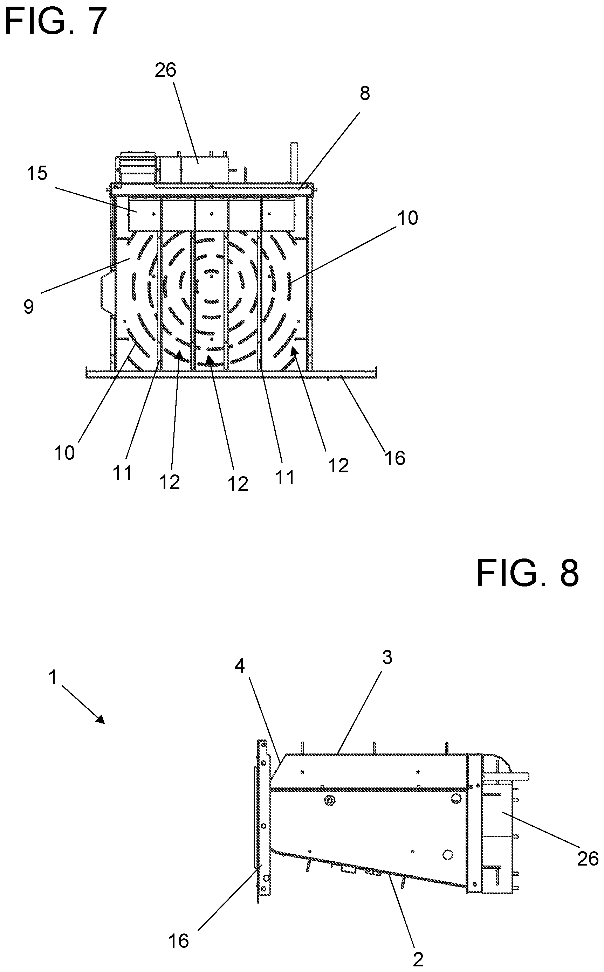

As can be seen in figure 7, the rear portions of these longitudinal air distribution chambers (12) are limited by a vertical plate (13) provided with multiple "venturis", tapered circular orifices (14) distributed regularly. In the rear portion of each longitudinal air distribution chamber (12) there is a deflector plate (15) comprising a rectangular plate that projects forward at an angle from the edge formed by the intersection of the horizontal flat plate (9) and the rear vertical plate (13) perforated by the "venturis" (14), however without reaching the upper face (3).

The present patent relating to a convection impingement oven presents a complex design with venturis (14) strategically arranged in the vertical plate (13), incorporated to provide precise control of the airflow within the device.

The venturis (14), which consist of tapered circular orifices, play a key role in improving air distribution. They accelerate the air as it passes through these orifices, creating high-velocity zones. This feature, along with the temperature, enables an exceptionally uniform distribution of heat and moisture within this cooking chamber (5), resulting in more homogeneous and efficient cooking.

Furthermore, the inclusion of "venturis" (14) allowed the development of a convection impingement oven, with precise adjustment of speed, temperature and air direction, adapting the cooking environment to the specific needs of each recipe.

This makes the respective "venturis" (14), tapered circular orifices, a fundamental part in the optimized operation of convection impingement ovens, guaranteeing consistent and high-quality results in various culinary applications.

As can be seen in figure 7, the said volumetric portion (7), aligned vertically, is divided into five longitudinal air distribution chambers (12), which are separated by means of parallel rectangular plates (11) positioned vertically, which extend from the rear face to the front face and occupy the entire height of the volume.

As seen in figure 10, the longitudinal air distribution chambers (12) are followed in their posterior portions by an upper air passage chamber (8), which is vertically aligned with the lower air passage chamber (6).

The longitudinal air distribution chambers (12) and the cooking chamber (5) are separated by a horizontal flat plate (9) provided with a plurality of arched openings (10) formed by concentric arch-shaped cutouts.

With regard to figure 7, said volumetric portion (7), aligned vertically, is divided into five longitudinal air distribution chambers (12), which are separated by means of parallel rectangular plates (11) positioned vertically, which extend from the rear face to the front face and occupy the entire height of the volume. This arrangement is designed to optimize the distribution of airflow within the structure, ensuring uniform and effective circulation.

The impinged airflow originating from the upper air passage chamber (8) passes through the vertical plate (13) provided with the corresponding "venturis" (14) and is subsequently directed to the longitudinal air distribution chambers (12). At this point, the air, propelled by the "venturis" (14), collides with the deflectors (15) and is redirected to the horizontal flat plate (9) which has a series of arched openings (10).

The longitudinal air distribution chambers (12) and the 'venturis' (14) play a crucial role in the operation of the hot air distribution system impinged on the cooking equipment in question. After the impinged air is directed to the longitudinal chambers (12), this flow is efficiently redirected by the deflectors (15) to the center of that portion of the horizontal flat plate (9). Here, the air is distributed evenly through a series of arched openings (10), ensuring an equitable and precise distribution of heat throughout the system.

Through extensive research and field testing, we have reached the unequivocal conclusion that the distribution of hot air impinged in our chamber (5) is an essential factor in obtaining exceptional results in the preparation of pizza or any other product. Thanks to the longitudinal chambers (12), the "venturis" (14) and the deflectors (15), we have achieved a homogeneous heat distribution that guarantees unparalleled quality.

The front face of the trapezoidal structure (1) has a flat plate (16) of rectangular geometry which has an area larger than the front edge of the structure itself (1), and said plate (16) has a horizontal rectangular opening (17) coinciding with the opening of the cooking chamber (5) and also has a vertical rectangular opening (18) displaced to the right beyond the structure (1).

The rear face relating to the cooking chamber (5) is closed by a lower plate (19), which has a horizontal rectangular opening (31) displaced towards the lower portion, and around its perimeter, on the outer face, there is a trapezoidal box (20), open on its inclined upper face, where a grid (21) is provided. Said trapezoidal box (20) receives the catalytic filter (35).

The said catalytic filter (35) is common in convection impingement ovens, but its replacement requires the presence of a specialized technician, resulting in the device being out of service. In addition to other developments made in the present invention, this one, focused on replacing the catalytic filter (35) without the need for a specialized technician, will have a positive impact on devices of this category.

Regular maintenance is required to ensure efficient and safe operation of these ovens.

Therefore, replacing the filter without the need for a technical operator aims to facilitate this maintenance, especially when replacing the catalytic filter (35). Reducing maintenance costs and frequency, without the need for equipment downtime.

In the intersection region between the perforated back plate (13) and the bottom plate (19) there is an orthogonal rectangular plate (22), which comprises the lower face of the upper passage chamber (8).

The perforated vertical plate (13) and the lower plate (19) located in the rear portion of the structure (1) are completely covered by a flat outer plate (23), whose edges (24) are curved 90° forward, the inner face having a narrow horizontal plate (25), in the portion corresponding to the upper face of the cooking chamber (5), which is orthogonally aligned with the rectangular plate (22).

The outer flat plate (23) maintains a spacing from the perforated vertical plate (13) and the lower plate (19), thus forming the upper passage chamber (8), which comprises a transverse air duct, located in the portions behind the longitudinal air distribution chambers (12), and a lower rear chamber (6), located next to the rear portion of the cooking chamber (5).

The rear outer plate (23) has a spiral-type housing (26) for a fan, whose air intake coincides with the circular hole (27) provided in the rear outer plate (23) and the air outlet (28) is positioned in the left portion of the upper air passage chamber (8), where there is a rectangular cutout (29).

Finally, the upper portion of the structure is enclosed by an upper cover (30) of predominantly rectangular prismatic geometry.

The trapezoidal structure (1) is positioned inside the oven cabinet (1A), with a horizontal grid (33) installed at the level of the lower edge of the front opening (17), supported on the front projection (36) and the rear supports (37), and above a lower electrical resistance (34), since the filter box (20) receives a catalytic filter (35) and an upper resistance (32) is installed under the horizontal plate (9).

The operation comprises the fact that air is propelled, by the fan, from the air outlet (28) to the upper passage chamber (8) and transferred to the longitudinal air distribution chambers (12) through the funnel-shaped orifices (14), wherein after entering the longitudinal air distribution chambers (12) the air flows that pass through the lower funnel orifices (14) reach the deflectors (15) and are deflected upwards, interfering with the air flows that pass through the upper funnel orifices (14) and thus creating turbulence that causes the air flow to pass through the arched openings (10), so that it reaches the food below uniformly, but first passing through the upper electrical resistance (32). After reaching the food, it passes through the horizontal grid (33) and the lower electrical resistance (34), located below, and goes to the lower rear chamber (6), passing first through the catalytic filter (35), then to the fan and restarting the cycle.

For greater accuracy in the evaluation, advanced simulation tools were employed, including Computational Fluid Dynamics (1A), along with a comprehensive series of practical tests involving a variety of foods. Based on the results obtained from the simulation, it is possible to evaluate the flow that is established within the device.

It is understood that when the present invention is put into practice, modifications may be introduced with regard to certain details of construction and form, without departing from the fundamental principles that are clearly present in the claims, it being understood that the terminology used was for the purpose of description and not limitation.

## Claims

1. A DEVICE FOR CONTINUOUS AIR CIRCULATION IN IMPINGEMENT ELECTRIC OVENS, comprising an apparatus consisting of a rigid structure (1) of hollow trapezoidal geometry, whose rear face of rectangular geometry is larger than the front portion of rectangular geometry, wherein the lower face (2) has an inclination that diverges in its rear portion in relation to the horizontal upper face (3), whose initial portion, next to the front face, is chamfered (4); wherein the front face of the trapezoidal structure (1) has a flat plate (16) of rectangular geometry which has an area greater than the front edge of the structure itself (1), since said plate (16) has a horizontal rectangular opening (17), which coincides with the opening of the cooking chamber (5) and also has a vertical rectangular opening (18) displaced to the right beyond the structure (1); **characterized by the fact that** internally the structure (1) is divided into a plurality of compartments, the cooking chamber (5) being the largest and occupying the lower front portion, followed in its rear portion by a lower air passage chamber (6) and followed above by a volumetric portion (7), aligned vertically above, which is divided into five longitudinal air distribution chambers (12), which are separated by means of parallel rectangular plates (11) positioned vertically, which extend from the rear face to the front face and occupy the entire height of the volume, the posterior portions of these longitudinal air distribution chambers (12) being limited by a vertical plate (13) provided with multiple tapered circular orifices, called "venturis" (14), regularly distributed, which accelerate the air as it passes through these orifices, creating zones of high speed and temperature.

2. THE DEVICE FOR CONTINUOUS AIR CIRCULATION IN IMPINGEMENT ELECTRIC OVENS, comprising an apparatus consisting of a rigid structure (1) of hollow trapezoidal geometry, whose rear face of rectangular geometry is larger than the front portion of rectangular geometry, wherein the lower face (2) has an inclination that diverges in its rear portion in relation to the horizontal upper face (3), whose initial portion, next to the front face, is chamfered (4); wherein the front face of the trapezoidal structure (1) has a flat plate (16) of rectangular geometry which has an area greater than the front edge of the structure itself (1), since said plate (16) has a horizontal rectangular opening (17), which coincides with the opening of the cooking chamber (5) and also has a vertical rectangular opening (18) displaced to the right beyond the structure (1) **characterized by the fact that** in the posterior portion of each longitudinal air distribution chamber (12) there is a deflector plate (15) comprising a rectangular plate that projects forward at an angle, in which the air is redirected to the center of the upper (3) and then directed to the horizontal flat plate (9) which has a series of arched openings (10), in the portion corresponding to the upper face of the cooking chamber (5).

3. THE DEVICE FOR CONTINUOUS AIR CIRCULATION IN IMPINGEMENT ELECTRIC OVENS, comprising an apparatus consisting of a rigid structure (1) of hollow trapezoidal geometry, whose rear face of rectangular geometry is larger than the front portion of rectangular geometry, and whose lower face (2) has an inclination that diverges in its rear portion in relation to the horizontal upper face (3), whose initial portion, next to the front face, is chamfered (4); the front face of the trapezoidal structure (1) having a flat plate (16) of rectangular geometry which has an area larger than the front edge of the structure itself (1), since said plate (16) has a horizontal rectangular opening (17) that coincides with the opening of the cooking chamber (5) and also has a vertical rectangular opening (18) displaced to the right beyond the structure (1), **characterized by the fact that** in the lower part of the cooking chamber (5), located below the horizontal grill (33) and the lower electric resistance (34), there is the catalytic filter (35).
